(19) Europäisches Patentamt
European Patent Office
Office européen des brevets

(11) **EP 4 148 978 B1**

(12) **EUROPEAN PATENT SPECIFICATION**

(45) Date of publication and mention
of the grant of the patent:
**12.02.2025 Bulletin 2025/07**

(21) Application number: **22306336.3**

(22) Date of filing: **09.09.2022**

(51) International Patent Classification (IPC):
*H02P 29/66* (2016.01)    *H02P 29/60* (2016.01)
*H02P 23/14* (2006.01)

(52) Cooperative Patent Classification (CPC):
**H02P 29/60; H02P 23/14; H02P 29/66**

(54) **CONTROL METHOD FOR THERMAL OVERLOAD PROTECTION OF ASYNCHRONOUS MOTOR**

VERFAHREN ZUR STEUERUNG DES THERMISCHEN ÜBERLASTSCHUTZES EINES ASYNCHRONMOTORS

PROCÉDÉ DE COMMANDE POUR LA PROTECTION THERMIQUE CONTRE LES SURCHARGES D'UN MOTEUR ASYNCHRONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.09.2021 CN 202111055238**

(43) Date of publication of application:
**15.03.2023 Bulletin 2023/11**

(73) Proprietor: **Schneider Electric Industries SAS 92500 Rueil-Malmaison (FR)**

(72) Inventor: **XING, Jinlei
Shanghai, 201203 (CN)**

(74) Representative: **Manitz Finsterwald
Patent- und Rechtsanwaltspartnerschaft mbB
Martin-Greif-Strasse 1
80336 München (DE)**

(56) References cited:
**EP-A2- 2 120 329      US-A- 5 539 601
US-A1- 2006 250 154**

**Description**

TECHNICAL FIELD

The present disclosure relates to a control method for thermal overload protection of asynchronous motor.

BACKGROUND

Traditional motor thermal overload protection does not provide a separate rotor thermal model. Or, although some motor thermal overload protections provide the rotor thermal model, they only consider the rotor thermal model during the start-up of the motor, and do not consider the heat exchange between the rotor and other parts of the motor. That is to say, the current rotor thermal model regards the rotor as adiabatic.

Without accurate calculation of thermal level of the rotor, rotor thermal overload protection will be inaccurate. It is hoped to propose a new and more accurate rotor thermal model for better thermal overload protection of asynchronous motor.

In US 2006/250154 A1, an induction motor having a rotor and a stator is protected during running overloads by connecting the motor to an overload protection relay that can be tripped to interrupt power to the motor in the event of an overload, tracking the stator winding temperature of the motor during running overloads with a hybrid thermal model by online adjustment in the hybrid thermal model, and tripping the overload protection relay in response to a predetermined running overload condition represented by the tracked stator winding temperature. In one embodiment of the invention, the stator winding temperature is tracked by use of an online hybrid thermal model that uses the resistance of the rotor as an indicator of rotor temperature and thus of the thermal operating conditions of the motor. The hybrid thermal model incorporates rotor losses and heat transfer between the rotor and the stator, and approximates the thermal characteristics of the rotor and stator.

SUMMARY

In view of the above-mentioned problems and requirements, the present disclosure proposes a new control method for thermal overload protection of asynchronous motor, which solves the above problems and brings other technical effects by adopting the following technical features.

The invention is defined in Claim 1.

At an aspect, the present disclosure proposes a control method for thermal overload protection of an asynchronous motor, wherein the asynchronous motor comprises a rotor and a stator, and the control method comprises: determining a current state of the asynchronous motor; determining a thermal level of the rotor according to a first formula based on the fact that the asynchronous motor is in a starting state; determining the thermal level of the rotor according to a second formula different from the first formula based on the fact that the asynchronous motor is in a running state; determining the thermal level of the rotor according to a third formula different from the first formula and the second formula based on the fact that the asynchronous motor is in a shutdown state; comparing the thermal level of the rotor with a first predetermined threshold value and a second predetermined threshold value greater than the first predetermined threshold value, and if the thermal level of the rotor is greater than the first predetermined threshold value and less than the second predetermined threshold value, issuing an overheat alarm; if the thermal level of the rotor is greater than a second predetermined threshold, shutting down the asynchronous motor.

According to a preferable technical solution, in the first formula, the thermal level of the rotor is determined based on a first rotor heating quantity term; in the second formula, the thermal level of the rotor is determined based on a second rotor heating quantity term and a stator thermal balance heating quantity term; in the third formula, the thermal level of the rotor is determined based on the stator thermal balance heating quantity term.

According to a preferable technical solution, the first formula is:

$$H_{rotor}(t) = H_{R1}(t) + H_{rotor}(t - \Delta t),$$

the second formula is:

$$H_{rotor}(t) = H_{R2}(t) + H_S(t) + \frac{\tau_{rotor}}{\tau_{rotor} + \Delta t} \cdot H_{rotor}(t - \Delta t),$$

the third formula is:

$$H_{rotor}(t) = H_s(t) + \frac{\tau_{rotor}}{\tau_{rotor}+\Delta t} \cdot H_{rotor}(t-\Delta t) \ ,$$

wherein, $H_{rotor}(t)$ and $H_{rotor}(t-\Delta t)$ are the thermal level of the rotor at time t and time $(t-\Delta t)$, respectively; $H_{R1}(t)$ is the first rotor heating quantity term; $H_{R2}(t)$ is the second rotor heating quantity term; $H_S(t)$ is the stator thermal balance heating quantity term; $\Delta t$ is a time interval of thermal calculation; $\tau_{rotor}$ is a rotor heating time constant in the running state of the asynchronous motor.

According to a preferable technical solution, the rotor heating time constant $\tau_{rotor}$ is calculated based on the following formula:

$$\tau_{rotor} = R_{thermal} \cdot C_{thermal} \ ,$$

wherein $R_{thermal}$ is an equivalent thermal resistance of the rotor, $C_{thermal}$ is an equivalent thermal capacitance of the rotor.

According to a preferable technical solution, the first rotor heating quantity term and the second rotor heating quantity term are both determined based on an equivalent thermal current of the rotor.

According to a preferable technical solution, the first rotor heating quantity term is obtained based on the following formula:

$$H_{R1}(t) = \left(\frac{I_{eq.rotor}(t)}{I_{LR}}\right)^2 \cdot \frac{R_N}{R_{LR}} \cdot \frac{\Delta t}{T_{cold}} \ ,$$

wherein, $I_{eq.rotor}(t)$ is the equivalent thermal current of the rotor at time t; $I_{LR}$ is a stator current of the rotor in a locked rotor state; $R_N$ is a rotor resistance at a rated speed; $R_{IR}$ is a rotor resistance of the rotor in the locked rotor state; $T_{cold}$ is an allowed locked rotor time of the rotor in a cold state.

According to a preferable technical solution, the second rotor heating quantity term is obtained based on the following formula:

$$H_{R2}(t) = \left(\frac{I_{eq.rotor}(t)}{I_{LR}}\right)^2 \cdot \frac{R_N}{R_{LR}} \cdot \frac{\Delta t}{\tau_{rotor}+\Delta t} \ ,$$

wherein, $I_{eq.rotor}(t)$ is the equivalent thermal current of the rotor at time t; $I_{LR}$ is a stator current of the rotor in a locked rotor state; $R_N$ is a rotor resistance at a rated speed; $R_{IR}$ is a rotor resistance of the rotor in the locked rotor state.

According to a preferable technical solution, the stator thermal balance heating quantity terms of the second formula and the third formula are determined based on the following formula:

$$H_s(t) = \alpha \cdot k^2 H_{stator}(t) \cdot \frac{\Delta t}{\tau_{rotor}+\Delta t} \ ,$$

wherein, $\alpha$ is the thermal level of the rotor upon the asynchronous motor being stable at a rated operating temperature; $k$ is an overload coefficient of the asynchronous motor; $H_{stator}(t)$ is a stator thermal level at time t.

According to a preferable technical solution, the equivalent thermal current of the rotor is determined based on the following formula:

$$I_{eq.rotor}(t)^2 = \frac{R_{pos}(t)}{R_N} \cdot I_1(t)^2 + \frac{R_{neg}(t)}{R_N} \cdot I_2(t)^2$$

,

wherein, $R_{pos}(t)$ is a positive-sequence rotor resistance at time t; $R_{neg}(t)$ is a negative-sequence rotor resistance at time t; $I_1(t)$ is a positive-sequence current in the stator at time t; $I_2(t)$ is a negative-sequence current in the stator at time t.

According to a preferable technical solution, the positive-sequence rotor resistance and the negative-sequence rotor resistance are obtained based on the following formula:

$$\begin{cases} R_{pos}(t) = (R_{LR} - R_N) \cdot s(t) + R_N \\ R_{neg}(t) = (R_{LR} - R_N) \cdot (2 - s(t)) + R_N \end{cases}$$

,

wherein, $s(t)$ is a real-time slip of the asynchronous motor at time t.

Hereinafter, a more detailed description will be given of the best embodiment for implementing the present disclosure with reference to the accompanying drawings, so that the features and advantages of the present disclosure can be easily understood.

BRIEF DESCRIPTION OF THE DRAWINGS

In order to more clearly explain the technical scheme of the embodiments of the present disclosure, the drawings of the embodiments of the present disclosure will be briefly introduced below. In which, the drawings are only used to show some embodiments of the present disclosure, but not to limit all embodiments of the present disclosure.

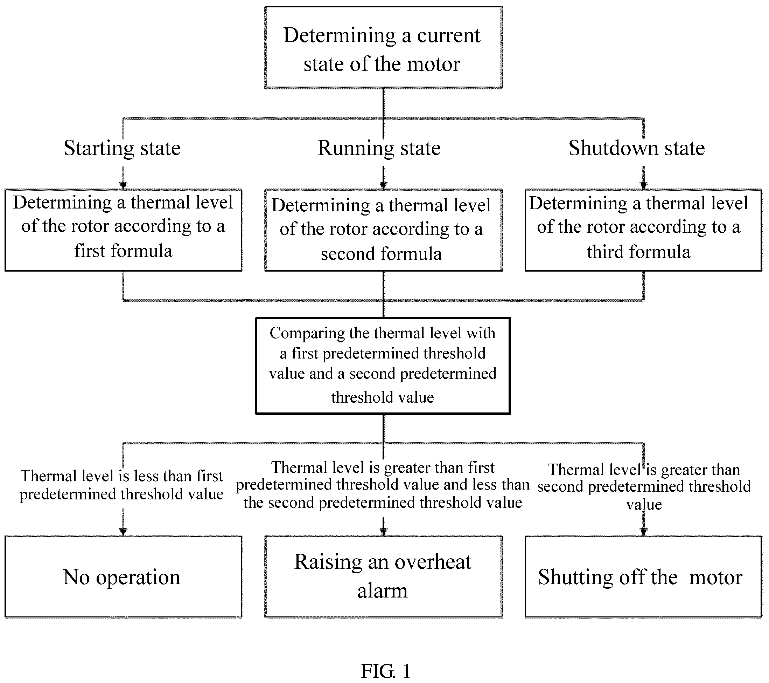

Fig. 1 is a flow chart of a control method for thermal overload protection of asynchronous motor proposed in the present disclosure.

DETAILED DESCRIPTION

In order to make the purposes, technical solutions and advantages of the technical scheme of the present disclosure clearer, the technical scheme of the present disclosure will be clearly and completely described below in conjunction with specific embodiments of the present disclosure. In the drawings, the same reference numerals represent the same components. It should be noted that the described embodiments are part of the embodiments of the present disclosure, but not all of them.

Unless otherwise defined, the technical terms or scientific terms used here shall have their ordinary meanings as understood by those with ordinary skills in the field to which the present disclosure belongs. The words "first", "second" and the like used in the description and claims of the present disclosure do not indicate any order, quantity or importance, but are only used to distinguish different components. Similarly, similar words such as "a" or "an" don't necessarily mean quantity limitation. Similar words such as "include" or "including" mean that the elements or objects appearing before the word cover the listed elements or objects appearing after the word and their equivalents, without excluding other elements or objects.

Referring to Fig. 1, it shows a basic flow chart of main steps of a control method for thermal overload protection of motor proposed in the present disclosure. The present method is especially suitable for an asynchronous motor including a rotor and a stator.

The control method for thermal overload protection proposed in the present disclosure mainly includes the following steps.

Firstly, determining a current state of the asynchronous motor. Herein, the current state of asynchronous motor can be divided into three types: a starting state, a running state and a shutdown state. Among them, in the present art, the starting state can also be called a locked rotor state.

After determining the current state of the asynchronous motor, according to different states, different thermal models (different formulas) are selected to determine the thermal level of the rotor.

Specifically, determining a thermal level of the rotor according to a first formula based on a starting state of the asynchronous motor; determining the thermal level of the rotor according to a second formula different from the first formula based on a running state of the asynchronous motor; determining the thermal level of the rotor according to a third formula different from the first formula and the second formula based on a shutdown state of the asynchronous motor.

After the thermal level of the rotor is determined, the thermal level of the rotor is compared with a predetermined threshold to determine whether it is overheated and whether it needs to be treated. Specifically, comparing the thermal level of the rotor with a first predetermined threshold value and a second predetermined threshold value greater than the first predetermined threshold value, and if the thermal level of the rotor is greater than the first predetermined threshold value and less than the second predetermined threshold value, raising an overheat alarm; if the thermal level of the rotor is greater than a second predetermined threshold, shutting off the asynchronous motor. If the thermal level of the rotor is less than the first predetermined threshold value, it means that the motor is running normally, and there is no need for operation control such as raising an overheat alarm or shutting off the asynchronous motor.

It can be seen that the present method monitors the heating quantity in all stages during the operation of the motor, so that the motor is protected in the whole process and the safety is improved.

Preferably, in the first formula, the thermal level of the rotor is determined based on a first rotor heating quantity term. Hereinafter, the rotor heating quantity term in the first formula is called the first rotor heating quantity term, so that the rotor heating quantity term in the second formula (called the second rotor heating quantity term) can be distinguished. Specifically, the first formula can be as follows.

$$H_{rotor}(t) = H_{R1}(t) + H_{rotor}(t - \Delta t) \, ,$$

Where, $H_{rotor}(t)$ and $H_{rotor}(t) - \Delta t$ are the thermal level of the rotor at time t and time $(t - \Delta t)$, respectively.

Preferably, in the second formula, the thermal level of the rotor is determined based on a second rotor heating quantity term and a stator thermal balance heating quantity term. Specifically, the second formula is as follows

$$H_{rotor}(t) = H_{R2}(t) + H_S(t) + \frac{\tau_{rotor}}{\tau_{rotor} + \Delta t} \cdot H_{rotor}(t - \Delta t),$$

wherein, $H_{R1}(t)$ is the first rotor heating quantity term, $H_{R2}(t)$ is the second rotor heating quantity term.

Preferably, in the third formula, the thermal level of the rotor is determined based on the stator thermal balance heating quantity term. Specifically, the third formula is as follows.

$$H_{rotor}(t) = H_s(t) + \frac{\tau_{rotor}}{\tau_{rotor} + \Delta t} \cdot H_{rotor}(t - \Delta t) \, ,$$

Where $\tau_{rotor}$ is a rotor heating time constant in the running state of the asynchronous motor. The rotor heating time constant can be obtained based on the motor model. More preferably, the rotor heating time constant is calculated based on the following formula: $\tau_{rotor} = R_{thermal} \cdot C_{thermal}$, wherein $R_{thermal}$ is an equivalent thermal resistance of the rotor, $C_{thermal}$ is an equivalent thermal capacitance of the rotor. Where, the equivalent thermal capacitance can be calculated based on the rotor resistance $R_N$ at a rated speed and the rotor resistance $R_{LR}$ at a locked rotor state, that is:

$$C_{thermal} = \frac{R_{LR}}{R_N}$$

The equivalent thermal resistance $R_{thermal}$ of the rotor can be calculated based on a locked rotor current $I_{LR}$, an allowed locked rotor time of the rotor in a cold state $T_{cold}$, and an allowed locked rotor time of the rotor in a cold state $T_{hot}$, that is:

$$R_{thermal} = I_{LR}^2 \cdot \left( T_{cold} - T_{hot} \right)$$

It can be seen that different rotor thermal models are adopted in different stages of the present method. The thermal level of the rotor is determined based on the first rotor heating quantity item in the starting state, the thermal level of the rotor is determined the second rotor heating quantity item and the stator thermal balance heating quantity term in the running state, and the thermal level of the rotor is determined based on the stator thermal balance heating quantity term in the shutdown state, so that each stage has more accurate thermal model protection.

In particular, the present disclosure incorporates the stator thermal balance heating quantity term into the model, which makes the established thermal model and the realized control method for thermal overload protection more accurate, and greatly reduces the risk of accidental tripping and overheating damage.

According to the present disclosure, the first rotor heating quantity term and the second rotor heating quantity term in the first formula and the second formula are both determined based on the equivalent thermal current of the rotor.

Specifically, the first rotor heating quantity term can be obtained based on the following formula.

$$H_{R1}(t) = \left(\frac{I_{eq.rotor}(t)}{I_{LR}}\right)^2 \cdot \frac{R_N}{R_{LR}} \cdot \frac{\Delta t}{T_{cold}}$$

Where, $I_{eq.rotor}(t)$ is the equivalent thermal current of the rotor at time t, $I_{LR}$ is a stator current of the rotor in a locked rotor state, $R_N$ is a rotor resistance at a rated speed, $R_{IR}$ is a rotor resistance of the rotor in the locked rotor state, and $T_{cold}$ is an allowed locked rotor time of the rotor in a cold state.

Specifically, the second rotor heating quantity term can be obtained based on the following formula.

$$H_{R2}(t) = \left(\frac{I_{eq.rotor}(t)}{I_{LR}}\right)^2 \cdot \frac{R_N}{R_{LR}} \cdot \frac{\Delta t}{\tau_{rotor} + \Delta t}$$

Where, $I_{eq.rotor}(t)$ is the equivalent thermal current of the rotor at time t, $I_{LR}$ is a stator current of the rotor in a locked rotor state, $R_N$ is a rotor resistance at a rated speed, and $R_{IR}$ is a rotor resistance of the rotor in the locked rotor state.

For the stator thermal balance heating quantity terms of the second formula and the third formula, they are preferably determined based on the following formula.

$$H_s(t) = \alpha \cdot k^2 H_{stator}(t) \cdot \frac{\Delta t}{\tau_{rotor} + \Delta t}$$

Where, $\alpha$ is the thermal level of the rotor upon the motor being stable at a rated operating temperature, $k$ is an overload coefficient of the motor, $H_{stator}(t)$ is a stator thermal level at time t.

By bringing the first rotor heating quantity term, the second rotor heating quantity term and the stator thermal balance heating quantity term into the first formula, the second formula and the third formula, a more specific formula is obtained as follows.

The first formula is:

$$H_{rotor}(t) = \left(\frac{I_{eq.rotor}(t)}{I_{LR}}\right)^2 \cdot \frac{R_N}{R_{LR}} \cdot \frac{\Delta t}{T_{cold}} + H_{rotor}(t - \Delta t)$$

The second formula is:

$$H_{rotor}(t) = \left(\frac{I_{eq.rotor}(t)}{I_{LR}}\right)^2 \cdot \frac{R_N}{R_{LR}} \cdot \frac{\Delta t}{\tau_{rotor} + \Delta t} + \alpha \cdot k^2 H_{stator}(t) \cdot \frac{\Delta t}{\tau_{rotor} + \Delta t} + \frac{\tau_{rotor}}{\tau_{rotor} + \Delta t} \cdot H_{rotor}(t - \Delta t)$$

The third formula is:

$$H_{rotor}(t) = \alpha \cdot k^2 H_{stator}(t) \frac{\Delta t}{\tau_{rotor} + \Delta t} + \frac{\tau_{rotor}}{\tau_{rotor} + \Delta t} \cdot H_{rotor}(t - \Delta t)$$

According to the preferred technical solution of the present disclosure, in the above algorithm, the equivalent thermal current of the rotor $I_{eq.rotor}(t)$ is determined based on the following formula:

$$I_{eq.rotor}(t)^2 = \frac{R_{pos}(t)}{R_N} \cdot I_1(t)^2 + \frac{R_{neg}(t)}{R_N} \cdot I_2(t)^2$$

**EP 4 148 978 B1**

Where, $R_{pos}(t)$ is a positive-sequence rotor resistance at time t, $R_{neg}(t)$ is a negative-sequence rotor resistance at time t, $I_1(t)$ is a positive-sequence current in the stator at time t, $I_2(t)$ is a negative-sequence current in the stator at time t.

According to a further preferred technical solution of the present disclosure, the positive-sequence rotor resistance $R_{pos}(t)$ and the negative-sequence rotor resistance $R_{neg}(t)$ are obtained based on the following formula:

$$\begin{cases} R_{pos}(t) = \left( R_{LR} - R_N \right) \cdot s(t) + R_N \\ R_{neg}(t) = \left( R_{LR} - R_N \right) \cdot \left( 2 - s(t) \right) + R_N \end{cases}$$

Where, $s(t)$ is a real-time slip of the asynchronous motor at time t. When the motor speed can be measured, the slip $s(t)$ can be estimated based on the following formula.

$$s(t) = \frac{\Omega_s - \Omega(t)}{\Omega_s}$$

Where, $\Omega(t)$ is the motor speed at time t, and $\Omega_s$ is the synchronous speed, for example, it can be 3000/N for a 50Hz system and 3600/N for a 60Hz system, where N = 1, 2, ....

The control method for thermal overload protection of asynchronous motor proposed in the present disclosure has been described above. In the present method, a specific rotor thermal model is established for each stage of motor operation, so that the whole process of motor operation is monitored, and each stage has more accurate thermal model protection.

## Claims

1. A control method for thermal overload protection of an asynchronous motor, wherein the asynchronous motor comprises a rotor and a stator, and **characterized in that** the control method comprises:

    determining a current state of the asynchronous motor;
    determining a thermal level of the rotor according to a first formula based on the fact that the asynchronous machine is in a starting state;
    determining the thermal level of the rotor according to a second formula different from the first formula based on the fact that the asynchronous motor is in a running state;
    determining the thermal level of the rotor according to a third formula different from the first formula and the second formula based on the fact that the asynchronous rotor is in a shutdown state;
    comparing the thermal level of the rotor with a first predetermined threshold value and with a second predetermined threshold value greater than the first predetermined threshold value, and if the thermal level of the rotor is greater than the first predetermined threshold value and less than the second predetermined threshold value, issuing an overheat alarm; if the thermal level of the rotor is greater than a second predetermined threshold, shutting down the asynchronous motor.

2. The control method according to claim 1, wherein:

    in the first formula, the thermal level of the rotor is determined based on a first rotor heating quantity term;
    in the second formula, the thermal level of the rotor is determined based on a second rotor heating quantity term and a stator thermal balance heating quantity term;
    in the third formula, the thermal level of the rotor is determined based on the stator thermal balance heating quantity term.

3. The control method according to claim 2, wherein,

    the first formula is:

$$H_{rotor}(t) = H_{R1}(t) + H_{rotor}(t - \Delta t),$$

    the second formula is:

$$H_{rotor}(t) = H_{R2}(t) + H_S(t) + \frac{\tau_{rotor}}{\tau_{rotor}+\Delta t} \cdot H_{rotor}(t - \Delta t),$$

the third formula is:

$$H_{rotor}(t) = H_s(t) + \frac{\tau_{rotor}}{\tau_{rotor}+\Delta t} \cdot H_{rotor}(t - \Delta t) ,$$

wherein:

$H_{rotor}(t)$ and $H_{rotor}(t - \Delta t)$ are the thermal level of the rotor at time t and time ($t - \Delta t$), respectively;
$H_{R1}(t)$ is the first rotor heating quantity term;
$H_{R2}(t)$ is the second rotor heating quantity term;
$H_s(t)$ is the stator thermal balance heating quantity term;
$\Delta t$ is a time interval of thermal calculation;
$\tau_{rotor}$ is a rotor heating time constant in the running state of the asynchronous motor.

4. The control method according to claim 3, wherein the rotor heating time constant $\tau_{rotor}$ is calculated based on the following formula:

$$\tau_{rotor} = R_{thermal} \cdot C_{thermal} ,$$

wherein $R_{thermal}$ is an equivalent thermal resistance of the rotor,
$C_{thermal}$ is an equivalent thermal capacitance of the rotor.

5. The control method according to claim 3, wherein the first rotor heating quantity term and the second rotor heating quantity term are both determined based on an equivalent thermal current of the rotor.

6. The control method according to claim 5, wherein the first rotor heating quantity term is obtained based on the following formula:

$$H_{R1}(t) = \left(\frac{I_{eq.rotor}(t)}{I_{LR}}\right)^2 \cdot \frac{R_N}{R_{LR}} \cdot \frac{\Delta t}{T_{cold}} ,$$

wherein:

$I_{eq.rotor}(t)$ is the equivalent thermal current of the rotor at time t;
$I_{LR}$ is a stator current of the rotor in a locked rotor state;
$R_N$ is a rotor resistance at a rated speed;
$R_{IR}$ is a rotor resistance of the rotor in the locked rotor state;
$T_{cold}$ is an allowed locked rotor time of the rotor in a cold state.

7. The control method according to claim 5, wherein the second rotor heating quantity term is obtained based on the following formula:

$$H_{R2}(t) = \left(\frac{I_{eq.rotor}(t)}{I_{LR}}\right)^2 \cdot \frac{R_N}{R_{LR}} \cdot \frac{\Delta t}{\tau_{rotor}+\Delta t} ,$$

wherein:

$I_{eq.rotor}(t)$ is the equivalent thermal current of the rotor at time t;
$I_{LR}$ is a stator current of the rotor in a locked rotor state;
$R_N$ is a rotor resistance at a rated speed;
$R_{IR}$ is a rotor resistance of the rotor in the locked rotor state.

8. The control method according to claim 3, wherein the stator thermal balance heating quantity terms of the second formula and of the third formula are determined based on the following formula:

$$H_s(t) = \alpha \cdot k^2 H_{stator}(t) \cdot \frac{\Delta t}{\tau_{rotor} + \Delta t} \ ,$$

wherein:

$\alpha$ is the thermal level of the rotor upon the asynchronous motor being stable at a rated operating temperature;
$k$ is an overload coefficient of the asynchronous motor;
$H_{stator}(t)$ is a stator thermal level at time t.

9. The control method according to claim 5, wherein the equivalent thermal current of the rotor is determined based on the following formula:

$$I_{eq.rotor}(t)^2 = \frac{R_{pos}(t)}{R_N} \cdot I_1(t)^2 + \frac{R_{neg}(t)}{R_N} \cdot I_2(t)^2 ,$$

wherein:

$R_{pos}(t)$ is a positive-sequence rotor resistance at time t;
$R_{neg}(t)$ is a negative-sequence rotor resistance at time t;
$I_1(t)$ is a positive-sequence current in the stator at time t;
$I_2(t)$ is a negative-sequence current in the stator at time t.

10. The control method according to claim 9, wherein the positive-sequence rotor resistance and the negative-sequence rotor resistance are obtained based on the following formula:

$$\begin{cases} R_{pos}(t) = \left( R_{LR} - R_N \right) \cdot s(t) + R_N \\ R_{neg}(t) = \left( R_{LR} - R_N \right) \cdot \left( 2 - s(t) \right) + R_N \end{cases} ,$$

wherein:
$s(t)$ is a real-time slip of the asynchronous motor at time t.

**Patentansprüche**

1. Steuerverfahren zum thermischen Überlastschutz eines Asynchronmotors, wobei der Asynchronmotor einen Rotor und einen Stator umfasst, und **dadurch gekennzeichnet, dass** das Steuerverfahren umfasst:

Bestimmen eines aktuellen Zustands des Asynchronmotors;
Bestimmen eines Wärmeniveaus des Rotors gemäß einer ersten Formel basierend auf der Tatsache, dass sich die Asynchronmaschine in einem Startzustand befindet;
Bestimmen des Wärmeniveaus des Rotors gemäß einer zweiten Formel, die sich von der ersten Formel unterscheidet, basierend auf der Tatsache, dass sich der Asynchronmotor in einem laufenden Zustand befindet;
Bestimmen des Wärmeniveaus des Rotors gemäß einer dritten Formel, die sich von der ersten Formel und der zweiten Formel unterscheidet, basierend auf der Tatsache, dass sich der Asynchronmotor in einem abgeschalteten Zustand befindet;
Vergleichen des Wärmeniveaus des Rotors mit einem ersten vorbestimmten Schwellenwert und mit einem zweiten vorbestimmten Schwellenwert, der größer als der erste vorbestimmte Schwellenwert ist, und wenn das Wärmeniveau des Rotors größer als der erste vorbestimmte Schwellenwert und kleiner als der zweite vorbestimmte Schwellenwert ist, Ausgeben eines Überhitzungsalarms; wenn das Wärmeniveau des Rotors größer als ein zweiter vorbestimmter Schwellenwert ist, Abschalten des Asynchronmotors.

2. Steuerverfahren nach Anspruch 1, wobei:

   in der ersten Formel das Wärmeniveau des Rotors basierend auf einem ersten Rotorheizmengenterm bestimmt wird;
   in der zweiten Formel das Wärmeniveau des Rotors basierend auf einem zweiten Rotorheizmengenterm und einem Statorwärmebilanzheizmengenterm bestimmt wird;
   in der dritten Formel das Wärmeniveau des Rotors basierend auf dem Statorwärmebilanzheizmengenterm bestimmt wird.

3. Steuerverfahren nach Anspruch 2, wobei:

   die erste Formel lautet:

   $$H_{rotor}(t) = H_{R1}(t) + H_{rotor}(t - \Delta t),$$

   die zweite Formel lautet:

   $$H_{rotor}(t) = H_{R2}(t) + H_S(t) \; + \frac{\tau_{rotor}}{\tau_{rotor} + \Delta t} \cdot H_{rotor}(t - \Delta t),$$

   die dritte Formel lautet:

   $$H_{rotor}(t) = H_s(t) + \frac{\tau_{rotor}}{\tau_{rotor} + \Delta t} \cdot H_{rotor}(t - \Delta t) \; ,$$

   wobei:

   $H_{rotor}(t)$ und $H_{rotor}(t - \Delta t)$ das Wärmeniveau des Rotors zum Zeitpunkt t bzw. Zeitpunkt $(t - \Delta t)$ sind;
   $H_{R1}(t)$ der erste Rotorheizmengenterm ist;
   $H_{R2}(t)$ der zweite Rotorheizmengenterm ist;
   $H_S(t)$ der Statorwärmebilanzheizmengenterm ist;
   $\Delta t$ ein Zeitintervall der thermischen Berechnung ist;
   $\tau_{rotor}$ eine Rotorheizzeitkonstante im laufenden Zustand des Asynchronmotors ist.

4. Steuerverfahren nach Anspruch 3, wobei die Rotorheizzeitkonstante $\tau_{rotor}$ basierend auf der folgenden Formel berechnet wird:

   $$\tau_{rotor} = R_{thermal} \cdot C_{thermal} \; ,$$

   wobei $R_{thermal}$ ein äquivalenter Wärmewiderstand des Rotors ist,
   $C_{thermal}$ eine äquivalente Wärmekapazität des Rotors ist.

5. Steuerverfahren nach Anspruch 3, wobei der erste Rotorheizmengenterm und der zweite Rotorheizmengenterm beide basierend auf einem äquivalenten Wärmestrom des Rotors bestimmt werden.

6. Steuerverfahren nach Anspruch 5, wobei der erste Rotorheizmengenterm basierend auf der folgenden Formel erhalten wird:

   $$H_{R1}(t) = \left(\frac{I_{eq \cdot rotor}(t)}{I_{LR}}\right)^2 \cdot \frac{R_N}{R_{LR}} \cdot \frac{\Delta t}{T_{cold}},$$

   wobei:

   $I_{eq.rotor}(t)$ der äquivalente Wärmestrom des Rotors zum Zeitpunkt t ist;
   $I_{LR}$ ein Statorstrom des Rotors in einem gesperrten Rotorzustand ist;

$R_N$ ein Rotorwiderstand bei einer Nenndrehzahl ist;

$R_{LR}$ ein Rotorwiderstand des Rotors im gesperrten Rotorzustand ist;

$T_{cold}$ eine zulässige Zeit für gesperrten Rotor des Rotors in einem kalten Zustand ist.

7. Steuerverfahren nach Anspruch 5, wobei der zweite Rotorheizmengenterm basierend auf der folgenden Formel erhalten wird:

$$H_{R2}(t) = \left(\frac{I_{eq \cdot rotor}(t)}{I_{\text{LR}}}\right)^2 \cdot \frac{R_N}{R_{LR}} \cdot \frac{\Delta t}{\tau_{rotor} + \Delta t} \, ,$$

wobei:

$I_{eq.rotor}(t)$ der äquivalente Wärmestrom des Rotors zum Zeitpunkt t ist;

$I_{LR}$ ein Statorstrom des Rotors in einem gesperrten Rotorzustand ist;

$R_N$ ein Rotorwiderstand bei einer Nenndrehzahl ist;

$R_{LR}$ ein Rotorwiderstand des Rotors im gesperrten Rotorzustand ist.

8. Steuerverfahren nach Anspruch 3, wobei die Statorwärmebilanzheizmengenterme der zweiten Formel und der dritten Formel basierend auf der folgenden Formel bestimmt werden:

$$H_s(t) = \alpha \cdot k^2 H_{stator}(t) \cdot \frac{\Delta t}{\tau_{rotor} + \Delta t} \, ,$$

wobei:

$\alpha$ das Wärmeniveau des Rotors ist, wenn der Asynchronmotor bei einer Nennbetriebstemperatur stabil ist;

$k$ ein Überlastkoeffizient des Asynchronmotors ist;

$H_{stator}(t)$ ein Statorwärmeniveau zum Zeitpunkt t ist.

9. Steuerverfahren nach Anspruch 5, wobei der äquivalente Wärmestrom des Rotors basierend auf der folgenden Formel bestimmt wird:

$$I_{eq.rotor}(t)^2 = \frac{R_{pos}(t)}{R_N} \cdot I_1(t)^2 + \frac{R_{neg}(t)}{R_N} \cdot I_2(t)^2 \, ,$$

wobei:

$R_{pos}(t)$ ein Rotorwiderstand positiver Sequenz zum Zeitpunkt t ist;

$R_{neg}(t)$ ein Rotorwiderstand negativer Sequenz zum Zeitpunkt t ist;

$I_1(t)$ ein Strom positiver Sequenz im Stator zum Zeitpunkt t ist;

$I_2(t)$ ein Strom negativer Sequenz im Stator zum Zeitpunkt t ist.

10. Steuerverfahren nach Anspruch 9, wobei der Rotorwiderstand positiver Sequenz und der Rotorwiderstand negativer Sequenz basierend auf der folgenden Formel erhalten werden:

$$\begin{cases} R_{pos}(t) = \left(R_{LR} - R_N\right) \cdot s(t) + R_N \\ R_{neg}(t) = \left(R_{LR} - R_N\right) \cdot \left(2 - s(t)\right) + R_N \end{cases} \, ,$$

wobei:

$s(t)$ ein Echtzeitschlupf des Asynchronmotors zum Zeitpunkt t ist.

**Revendications**

1. Procédé de commande pour une protection thermique contre les surcharges d'un moteur asynchrone, dans lequel le moteur asynchrone comprend un rotor et un stator, et **caractérisé en ce que** le procédé de commande comprend les étapes consistant à :

déterminer un état de courant du moteur asynchrone ;
déterminer un niveau thermique du rotor selon une première formule sur la base du fait que le moteur asynchrone est dans un état de démarrage ;
déterminer le niveau thermique du rotor selon une deuxième formule différente de la première formule sur la base du fait que le moteur asynchrone est dans un état de fonctionnement ;
déterminer le niveau thermique du rotor selon une troisième formule différente de la première formule et de la deuxième formule sur la base du fait que le rotor asynchrone est dans un état d'arrêt ;
comparer le niveau thermique du rotor à une première valeur seuil prédéterminée et à une seconde valeur seuil prédéterminée qui est supérieure à la première valeur seuil prédéterminée, et si le niveau thermique du rotor est supérieur à la première valeur seuil prédéterminée et inférieur à la seconde valeur seuil prédéterminée, émettre une alarme de surchauffe ; si le niveau thermique du rotor est supérieur à une seconde valeur seuil prédéterminée, arrêter le moteur asynchrone.

2. Procédé de commande selon la revendication 1, dans lequel :

dans la première formule, le niveau thermique du rotor est déterminé sur la base d'un premier terme de quantité de chauffe de rotor ;
dans la deuxième formule, le niveau thermique du rotor est déterminé sur la base d'un second terme de quantité de chauffe de rotor et d'un terme de quantité de chauffe d'équilibre thermique de stator ;
dans la troisième formule, le niveau thermique du rotor est déterminé sur la base du terme de quantité de chauffe d'équilibre thermique de stator.

3. Procédé de commande selon la revendication 2, dans lequel,

la première formule est :

$$H_{rotor}(t) = H_{R1}(t) + H_{rotor}(t - \Delta t),$$

la deuxième formule est :

$$H_{rotor}(t) = H_{R2}(t) + H_S(t) + \frac{\tau_{rotor}}{\tau_{rotor}+\Delta t} \cdot H_{rotor}(t - \Delta t),$$

la troisième formule est :

$$H_{rotor}(t) = H_S(t) + \frac{\tau_{rotor}}{\tau_{rotor}+\Delta t} \cdot H_{rotor}(t - \Delta t),$$

où :

$H_{rotor}(t)$ et $H_{rotor}(t-\Delta t)$ sont le niveau thermique du rotor à un temps t et à un temps ($t - \Delta t$), respectivement ;
$H_{R1}(t)$ est le premier terme de quantité de chauffe de rotor ;
$H_{R2}(t)$ est le second terme de quantité de chauffe de rotor ;
$H_S(t)$ est le terme de quantité de chauffe d'équilibre thermique de stator ; $\Delta t$ est un intervalle de temps d'un calcul thermique ;
$\tau_{rotor}$ est une constante de temps de chauffe de rotor dans l'état de fonctionnement du moteur asynchrone.

4. Procédé de commande selon la revendication 3, dans lequel la constante de temps de chauffe de rotor $\tau_{rotor}$ est calculée sur la base de la formule suivante :

$$\tau_{rotor} = R_{thermal} \cdot C_{thermal},$$

où $R_{thermal}$ est une résistance thermique équivalente du rotor,
$C_{thermal}$ est une capacité thermique équivalente du rotor.

5. Procédé de commande selon la revendication 3, dans lequel le premier terme de quantité de chauffe de rotor et le second terme de quantité de chauffe de rotor sont tous deux déterminés sur la base d'un courant thermique équivalent du rotor.

6. Procédé de commande selon la revendication 5, dans lequel le premier terme de quantité de chauffe de rotor est obtenu sur la base de la formule suivante :

$$H_{R1}(t) = \left( \frac{I_{eq.rotor}(t)}{I_{LR}} \right)^2 \cdot \frac{R_N}{R_{LR}} \cdot \frac{\Delta t}{T_{cold}},$$

où :

$I_{eq.rotor}(t)$ est le courant thermique équivalent du rotor à un temps t ;
$I_{LR}$ est un courant de stator du rotor dans un état de rotor bloqué ;
$R_N$ est une résistance de rotor à une vitesse nominale ;
$R_{LR}$ est une résistance de rotor du rotor dans l'état de rotor bloqué ;
$T_{cold}$ est un temps de rotor bloqué admissible du rotor dans un état à froid.

7. Procédé de commande selon la revendication 5, dans lequel le second terme de quantité de chauffe de rotor est obtenu sur la base de la formule suivante :

$$H_{R2}(t) = \left( \frac{I_{eq.rotor}(t)}{I_{LR}} \right)^2 \cdot \frac{R_N}{R_{LR}} \cdot \frac{\Delta t}{\tau_{rotor} + \Delta t},$$

où :

$I_{eq.rotor}(t)$ est le courant thermique équivalent du rotor à un temps t ;
$I_{LR}$ est un courant de stator du rotor dans un état de rotor bloqué ;
$R_N$ est une résistance de rotor à une vitesse nominale ;
$R_{LR}$ est une résistance de rotor du rotor dans l'état de rotor bloqué.

8. Procédé de commande selon la revendication 3, dans lequel les termes de quantité de chauffe d'équilibre thermique de stator de la deuxième formule et de la troisième formule sont déterminés sur la base de la formule suivante :

$$H_s(t) = \alpha \cdot k^2 H_{stator}(t) \cdot \frac{\Delta t}{\tau_{rotor} + \Delta t},$$

où :

$\alpha$ est le niveau thermique du rotor lorsque le moteur asynchrone est stable à une température de fonctionnement nominale ;
$k$ est un coefficient de surcharge du moteur asynchrone ;
$H_{stator}(t)$ est un niveau thermique de stator à un temps t.

9. Procédé de commande selon la revendication 5, dans lequel le courant thermique équivalent du rotor est déterminé sur la base de la formule suivante :

$$I_{eq.rotor}(t)^2 = \frac{R_{pos}(t)}{R_N} \cdot I_1(t)^2 + \frac{R_{neg}(t)}{R_N} \cdot I_2(t)^2,$$

où :

$R_{pos}(t)$ est une résistance de rotor de séquence positive à un temps t ;
$R_{neg}(t)$ est une résistance de rotor de séquence négative à un temps t ;
$I_1(t)$ est un courant de séquence positive dans le stator à un temps t ;
$I_2(t)$ est un courant de séquence négative dans le stator à un temps t.

10. Procédé de commande selon la revendication 9, dans lequel la résistance de rotor de séquence positive et la résistance de rotor de séquence négative sont obtenues sur la base de la formule suivante :

$$\begin{cases} R_{pos}(t) = \left( R_{LR} - R_N \right) \cdot s(t) + R_N \\ R_{neg}(t) = \left( R_{LR} - R_N \right) \cdot \left( 2 - s(t) \right) + R_N \end{cases},$$

où :
$s(t)$ est un glissement en temps réel du moteur asynchrone à un temps t.

```
                        ┌─────────────────────────┐
                        │  Determining a current  │
                        │    state of the motor   │
                        └─────────────────────────┘
                                     │
        ┌────────────────────────────┼────────────────────────────┐
   Starting state              Running state               Shutdown state
        │                            │                            │
┌─────────────────┐        ┌─────────────────┐        ┌─────────────────┐
│Determining a     │        │Determining a     │        │Determining a     │
│thermal level     │        │thermal level     │        │thermal level     │
│of the rotor      │        │of the rotor      │        │of the rotor      │
│according to a    │        │according to a    │        │according to a    │
│first formula     │        │second formula    │        │third formula     │
└─────────────────┘        └─────────────────┘        └─────────────────┘
        └────────────────────────────┼────────────────────────────┘
                                     │
                        ┌─────────────────────────┐
                        │ Comparing the thermal    │
                        │ level with a first       │
                        │ predetermined threshold  │
                        │ value and a second       │
                        │ predetermined            │
                        │ threshold value          │
                        └─────────────────────────┘
                                     │
        ┌────────────────────────────┼────────────────────────────┐
```

Thermal level is less than first predetermined threshold value

Thermal level is greater than first predetermined threshold value and less than the second predetermined threshold value

Thermal level is greater than second predetermined threshold value

| No operation | Raising an overheat alarm | Shutting off the motor |
|---|---|---|

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006250154 A1